# EUROPÄISCHE PATENTSCHRIFT

(11) **EP 2 378 627 B1**
(45) Veröffentlichungstag und Bekanntmachung des Hinweises auf die Patenterteilung: **20.11.2013**
(21) Anmeldenummer: 10159797.9
(22) Anmeldetag: 13.04.2010
(51) Int. Cl.: H02K 1/14, H02K 29/03

(54) **Elektromotor**
Electric motor
Moteur électrique

(43) Veröffentlichungstag der Anmeldung: 19.10.2011
(73) Patentinhaber: ebm-papst Mulfingen GmbH & Co. KG, 74673 Mulfingen (DE)
(72) Erfinder: Krotsch, Jens, 97996 Niederstetten (DE)
(74) Vertreter: Patentanwälte Dr. Solf & Zapf

(56) Entgegenhaltungen:
- EP-A2- 1 246 349
- DE-A1- 10 247 187
- DE-A1-102006 047 604
- US-A1- 2005 023 919

## Beschreibung

Die vorliegende Erfindung betrifft einen Elektromotor mit einem Stator und einem radialsymmetrischen, zur Rotation relativ zu dem koaxialen Stator um eine gemeinsame Motorachse vorgesehenen, permanentmagneterregten Rotor.

Aus der EP 1 246 349 A2 ist ein Elektromotor mit einem Stator und einem radialsymmetrischen, zur Rotation relativ zu dem koaxialen Stator um eine gemeinsame Motorachse vorgesehenen, permanentmagneterregten Rotor bekannt, wobei der Stator einen radialsymmetrischen Eisenkern mit einer bestimmten Anzahl von in Umfangsrichtung jeweils über Statornuten und Nutschlitze benachbarten Statorzähnen aufweist. Hierbei besitzt der Rotor eine bestimmte Anzahl von über den Umfang verteilt angeordneten und über Polübergänge benachbarten Polmagneten und radial zwischen den Rotor-Polmagneten und den Statorzähnen ist ein umfangsgemäßer Luftspalt gebildet, wobei jeder Statorzahn auf seiner dem Luftspalt zugewandten Oberfläche ausgehend von seinen in Umfangsrichtung an die beidseitig benachbarten Nutschlitze angrenzenden Seitenbereichen jeweils einen reliefartigen, den Luftspalt bereichsweise radial vergrößernden Topografiebereich mit einer konkaven Aussparung aufweist, deren Kanten zeichnerisch abgerundet sind.

Aus der US 2005/0023919 A1 ist ein Elektromotor mit einem Stator und einem radialsymmetrischen zur Rotation relativ zu dem koaxialen Stator um eine gemeinsame Motorachse vorgesehenen, permanenterregten Rotor bekannt, wobei jeder Statorzahn auf seiner dem Luftspalt zugewandten Oberfläche Hilfsnuten mit einer rechteckigen Kontur mit kontenförmigen Begrenzungen aufweiset.

Die bekannten permanenterregten Motoren zeichnen sich durch einen hohen Wirkungsgrad aus und eignen sich - insbesondere in einer Ausführung als Außenläufermotor - besonders als Antriebe für Ventilatoren und Gebläse. Aufgrund von magnetischen Leitwertschwankungen entlang des Luftspaltes, hervorgerufen durch die Nuten des Stator-Eisenkerns, üblicherweise des Statorblechpaketes, kommt es bei diesen Motoren im Betrieb zu Drehmomentschwankungen, den so genannten Nutrastmomenten, die nachteiligerweise zur Anregung von Schwingungen und Geräuschen führen können. Besonders bei Ventilatoren, die in der Kälte- und Klimatechnik zur Anwendung kommen, wird ein möglichst geräuscharmer Betrieb mit hohem Wirkungsgrad gefordert.

Bei dem vorstehenden Stand der Technik dienen die Aussparungen zur Reduzierung der Nutrastmomente.

Die DE 101 47 310 B4 beschreibt schalenförmige Magnetsegmente mit in axialer Richtung schräg verlaufenden Seiten. Aufgrund der ebenfalls schräg verlaufenden Polübergänge werden hier die Rastmomente reduziert. Gleichzeitig sinkt jedoch hierdurch die permanentmagnetische Flussverkettung und damit die Drehmomentdichte und der Wirkungsgrad gegenüber einer Ausführung mit geraden Übergängen ab. Ferner ist die Herstellung solcher Magnetsegmente mit zusätzlichen Kosten verbunden.

Magnetsegmente mit axial schräg verlaufenden Seiten sind auch in den weiteren Dokumenten DE 199 01 310 A1, DE 295 10 938 U1, JP 561 53 961 A sowie auch in EP 0 375 228 B2 bzw. US 4 933 584 beschrieben.

Die EP 0 375 228 B2 bzw. US 4 933 584 beschreiben rechteckförmig oder halbkreisförmig verlaufende konkave Aussparungen an Statorzähnen. Die Aussparungen gehen in Umfangsrichtung unstetig mit Sprüngen und Kanten ineinander über. Die Aussparungen verlaufen zudem in axialer Richtung schräg, ebenso wie die Nuten. Zusätzlich ist die Magnetisierung der Permanentmagnete in axialer Richtung schräg verlaufend ausgeführt. Dies reduziert in bekannter Weise nicht nur das Nutrastmoment, sondern auch die Dehmomentdichte und den Wirkungsgrad des Motors. Insbesondere eine schräg verlaufende Nut ist zudem mit einem größeren Aufwand für das Einbringen der Wicklung verbunden. Zudem führt auch hier die Schrägung zu einer Verringerung der Permanentmagnet-Flussverkettung und damit des Drehmomentes.

Die JP 56 153 961 A beschreibt Aussparungen an den Zähnen mit dem Ziel der Reduzierung des Nutrastmomentes, jedoch bei ungleicher Nutteilung (Zahnbreiten). Hierdurch entstehen Haupt- und Hilfszähne. Die Aussparungen haben die Form von konkaven Halbkreisen und gehen in Umfangsrichtung unstetig mit Sprüngen und Kanten ineinander über. Bezüglich der Nutmittelachsen sind die Aussparungen an den Zähnen asymmetrisch. Ferner verläuft die Magnetisierung der Permanentmagnete schräg und/oder versetzt in axialer Richtung. Eine solche Schrägung reduziert bekanntlich die Permanentmagnet-Flussverkettung und damit die Drehmomentdichte und den Wirkungsgrad des Motors.

In den weiteren Dokumenten DE 28 50 478 C3, EP 0 081 524 B1, EP 0 473 534 B1 und EP 0 545 060 B1 sind jeweils Permanentmagnete mit geraden Seiten, aber schräg verlaufenden Polübergängen aufgrund entsprechender Magnetisierung beschrieben.

Diese Ausgestaltung hat ebenfalls eine negative Auswirkung auf die Drehmomentdichte und den Wirkungsgrad. Zudem hat ein schräg verlaufender Polübergang noch einen weiteren Nachteil. Der zur Reduzierung der Rastmomente eigentlich günstige Schrägungswinkel hängt jeweils ab von der axialen Länge des Stators bzw. Stator-Eisenkerns (Ständerblechpaket), so dass für unterschiedliche Längen jeweils separate Magnetisierungsvorrichtungen vorzuhalten sind.

Das Dokument DE 37 10 658 A1 betrifft einen Gleichstrommotor mit einem Rotor, der in axialer Richtung mehrteilige Permanentmagnete aufweist, wobei die einzelnen Teile in Umfangsrichtung gegeneinander versetzt angeordnet sind. Auch diese Anordnung führt grundsätzlich zu einer Verringerung des Rastmomentes, jedoch nachteiligerweise auf Kosten der Drehmomentdichte und des Wirkungsgrades sowie verbunden mit einem erhöhten fertigungstechnischen Aufwand zum Anbringen der Teilmagnete und deren Aufmagnetisierung.

In der DE 37 23 099 C2 wird eine Ausführung mit einem in Umfangsrichtung periodisch unterschiedlichen Luftspalt durch axial verlaufende, magnetisch leitende Erhöhungen in Form von Nocken auf den Statorzähnen beschrieben. Dabei ragen die Nocken in den Luftspalt. Unter Berücksichtigung von Fertigungsungenauigkeiten muss der Luftspalt insgesamt größer ausgelegt sein, um auch im Bereich der Nocken noch einen ausreichenden Spalt zu gewährleisten. Hierdurch reduziert sich aber die Drehmomentdichte und der Wirkungsgrad und/oder es ist ein erhöhter Fertigungsaufwand zum Erreichen einer größeren Genauigkeit erforderlich.

In der DE 103 03 848 A1 ist zur Reduzierung des Rastmomentes eine asymmetrische Anordnung der Magnete über den Rotorumfang beschrieben. Diese Lösung ist mit einem zusätzlich fertigungstechnischen Aufwand zur genauen Positionierung der Magnete verbunden. Ferner hat die derart erzeugte Asymmetrie einen negativen Einfluss auf das elektromagnetisch erzeugte Drehmoment in Form von zusätzlichen Pendelmomenten gegenüber einer symmetrischen Anordnung.

Der vorliegenden Erfindung liegt die Aufgabe zu Grunde, einen Elektromotor der eingangs beschriebenen, gattungsgemäßen Art zu schaffen, der sowohl ein geringes Nutrastmoment, als auch gleichzeitig einen hohen Wirkungsgrad und eine hohe Materialausnutzung (Drehmomentdichte) aufweist. Mit anderen Worten soll das Nutrastmoment ohne negative Beeinflussung von Wirkungsgrad und Drehmomentdichte reduziert werden. Zudem soll der Elektromotor mit einem geringen fertigungstechnischen Aufwand herstellbar sein.

Erfindungsgemäß wird dies durch die Merkmale des Anspruchs 1 erreicht. Vorteilhafte Ausgestaltungsmerkmale der Erfindung sind in den abhängigen Ansprüchen und in der anschließenden Beschreibung enthalten.

Demnach weist jeder Statorzahn erfindungsgemäß auf seiner dem Luftspalt zugewandten, eigentlich dem Luftspalt entsprechend kreisbogenförmig gekrümmten Oberfläche ausgehend von seinen in Umfangsrichtung an die beidseitig benachbarten Nutschlitze angrenzenden Seitenbereichen jeweils einen reliefartigen, den Luftspalt bereichsweise radial vergrößernden Topografiebereich mit mehreren konkaven Aussparungen und mit einem in Umfangsrichtung stetigen, sprung- und kantenfreien und dadurch wellenartigen Verlauf auf. Unter dem Begriff "stetiger Verlauf' ist zu verstehen, dass sich der Radius des Statorzahns in Umfangsrichtung kontinuierlich ohne Sprünge verändert. Die wellenartige Kontur verläuft somit entlang einer kontinuierlichen Kurve, wobei alle Bereiche ohne Knick tangential aneinander anschließen. Hierbei sind die Statorzähne in den wellenartigen Topografiebereichen sowie auch im Bereich der Nutschlitze vorteilhafterweise in axialer Richtung gesehen gerade bzw. zur Motorachse parallel verlaufend ausgebildet, wodurch alle Nachteile von schräg verlaufenden Ausführungen, wie sie oben beschrieben sind, vorteilhafterweise vermieden werden. Vor allem ist der erfindungsgemäße Motor dadurch einfach und kostengünstig zu fertigen, und zwar besonders in Verbindung mit einer Zahnbewicklung des Stator-Eisenkerns, wobei die Wicklungen durch die Statornuten hindurch um die Statorzähne gewickelt werden.

Durch die erfindungsgemäßen wellenartigen Topografiebereiche, die bevorzugt in Umfangsrichtung bezüglich radialer Nutmittelachsen sowie auch bezüglich radialer Zahnmittelachsen symmetrisch ausgebildet sind, kann das Nutrastmoment vorteilhafterweise nahezu ohne negativen Einfluss auf den Motor-Wirkungsgrad und die Drehmomentdichte reduziert werden. Das Wirkprinzip kann wie folgt dargestellt werden. Das Nutrastmoment entsteht durch eine Interaktion der Magnet-Polübergänge des Rotors mit den Nuischlitzen des Stators. Auch die erfindungsgemäß vorgesehenen Aussparungen der wellenartigen Topografiebereiche erzeugen grundsätzlich eine Drehmomentschwankung, die aber aufgrund eines Versatzes in Umfangsrichtung gegenüber den Nutschlitzen gegenphasig zum Nutrastmoment und hierbei von ähnlicher Amplitude ist. Diese von den erfindungsgemäßen Material-Aussparungen hervorgerufene Drehmomentschwankung und das eigentliche Nutrastmoment überlagern sich und heben sich in ihrer resultierenden Wirkung ganz oder zumindest teilweise auf.

Weitere besondere Ausgestaltungsmerkmale werden im Folgenden noch genauer erläutert werden.

Dazu wird im Folgenden anhand der Zeichnung die Erfindung weitergehend erläutert. Es zeigen:
- Fig. 1 bis 3: jeweils einen vereinfachten, schematischen Halb-Querschnitt durch unterschiedliche Ausführungsvarianten eines Elektromotors in einer bevorzugten Ausführung als Außenläufermotor,
- Fig. 4: eine Darstellung wie in Fig. 2 mit zusätzlich eingezeichneten Winkeln,
- Fig. 5: den Bereich V aus Fig. 1 in einer vergrößerten Darstellung,
- Fig. 6: mit Teilfiguren 6a bis 6d, verschiedene erfindungsgemäße Ausführungsvarianten in Ausschnittdarstellungen ähnlich Fig. 5,
- Fig. 7: eine weitere Darstellung der Erfindung ähnlich Fig. 5 zur Erläuterung des Wirkungsprinzips der Erfindung und
- Fig. 8: ein Diagramm zur Veranschaulichung des Nutrastmomentes gemäß vorliegender Erfindung im Vergleich zum Stand der Technik.

In den verschiedenen Figuren der Zeichnung sind gleiche Teile stets mit den gleichen Bezugszeichen versehen.

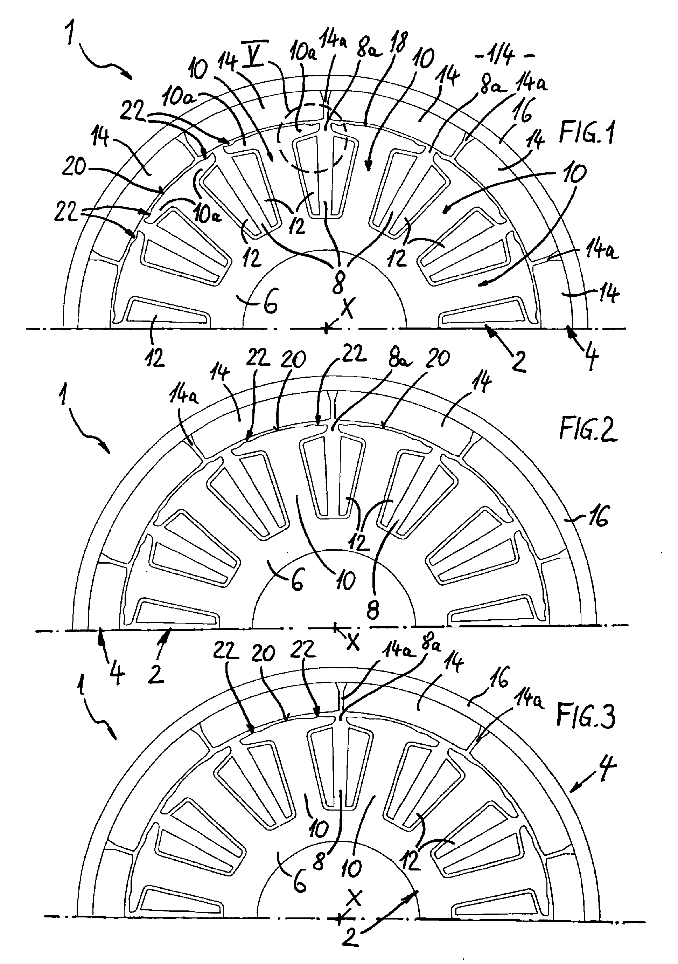

Wie sich zunächst aus den Figuren 1 bis 4 ergibt, besteht ein nur schematisch veranschaulichter Elektromotor 1 aus einem Stator 2 und einem Rotor 4. Der Stator 2 und der Rotor 4 sind bezüglich einer gemeinsamen Motorachse X koaxial zueinander angeordnet, wobei der Rotor 4 relativ zu dem Stator 2 um die Motorachse X drehbar ist. In den dargestellten Ausführungsbeispielen ist der Elektromotor 1 als Außenläufermotor ausgebildet, wobei der Rotor 4 den Stator 2 koaxial umschließt. Grundsätzlich ist die vorliegende Erfindung aber auch für Innenläufermotoren geeignet, bei denen bekanntlich der Rotor innerhalb des Stators rotiert.

Der Stator 2 weist einen radialsymmetrischen Eisenkern 6 auf, der üblicherweise als Statorblechpaket aus geschichteten Blechen ausgebildet ist. Hierbei weist der Eisenkern 6 eine bestimmte Anzahl N von in Umfangsrichtung jeweils über Statornuten 8 und Nutschlitze 8a benachbarten Statorzähnen 10 auf. Die Statorzähne 10 sind bezogen auf die Motorachse X radial ausgerichtet und weisen jeweils insgesamt eine im radialen Querschnitt gesehen T-förmige Ausgestaltung mit endseitig in Umfangsrichtung beidseitig symmetrisch verlängerten Polschuhen 10a auf. Jeder Statorzahn 10 trägt eine von mehreren Statorwicklungen 12, die in Form einer so genannten Zahnwicklung durch die Statornuten 8 hindurch um die Statorzähne 10 gewickelt sind.

Der radialsymmetrisch ausgebildete Rotor 4 weist eine bestimmte Anzahl P von über den Umfang verteilt angeordneten Polmagneten 14 auf, die jeweils über Polübergänge 14a benachbart sind. Diese Polübergänge 14a können entweder, wie dargestellt, durch Abstände zwischen einzelnen Magnetelementen definiert sein, oder - bei Verwendung eines einteiligen Ringmagneten oder ringförmig angeordneten Magnetbandes - durch Nulldurchgänge der Rotormagnetisierung in Übergangsbereichen jeweils von einer Polarität des Rotormagneten auf die nachfolgende, gegensinnige Polarität. Alle Polmagnete 14 sind über ein gemeinsames weichmagnetisches Rückschlusselement 16 verbunden. Bei dem dargestellten Ausführungsbeispiel als Außenläufermotor sind die Polmagnete 14 auf dem Innenumfang des zylindrischen Rückschlusselementes 16 angeordnet.

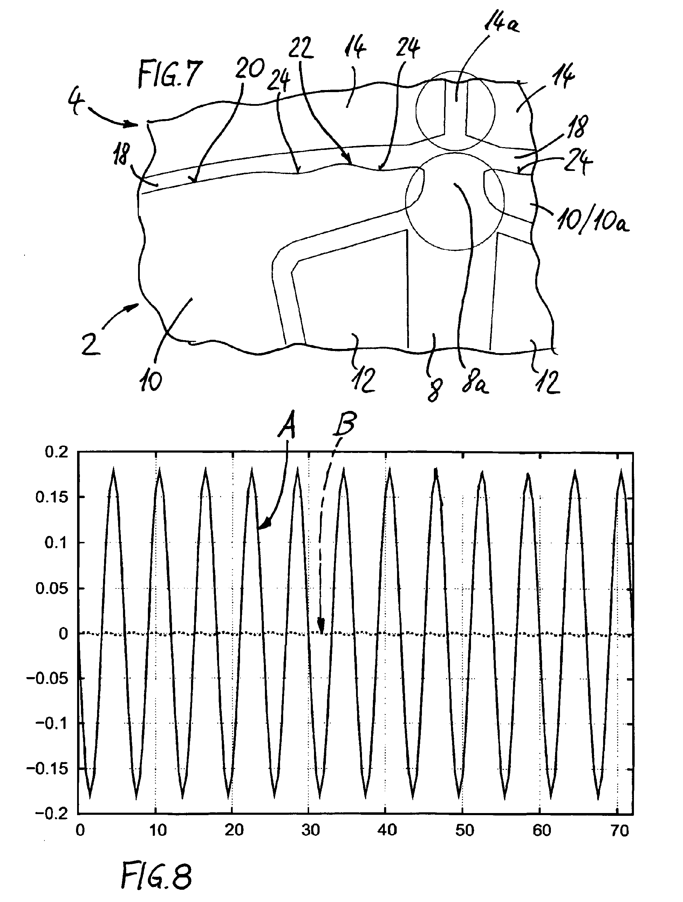

Radial zwischen den Rotor-Polmagneten 14 und den Statorzähnen 10 ist ein umfangsgemäßer, im Wesentlichen zylindrischer Luftspalt 18 gebildet. Dieser Luftspalt 18 ermöglicht die Rotation des Rotors 4, wobei diese Rotation durch eine Wechselwirkung des über eine Ansteuerung der Statorwicklungen 12 erzeugten Stator-Magnetfeldes über den Luftspalt 18 hinweg mit den Magnetfeldern der Polmagnete 14 bewirkt wird. Normalerweise kommt es hierbei - zumindest bei bekannten Elektromotoren - aufgrund von magnetischen Leitwertschwankungen entlang des Luftspaltes 18, hervorgerufen durch die Wechselwirkung zwischen den Statornuten 8 bzw. den Nutschlitzen 8a und den Polübergängen 14a zwischen den Polmagneten 14, zu Drehmomentschwankungen, den so genannten Nutrastmomenten (siehe dazu im Diagramm nach Fig. 8 den Momentverlauf A).

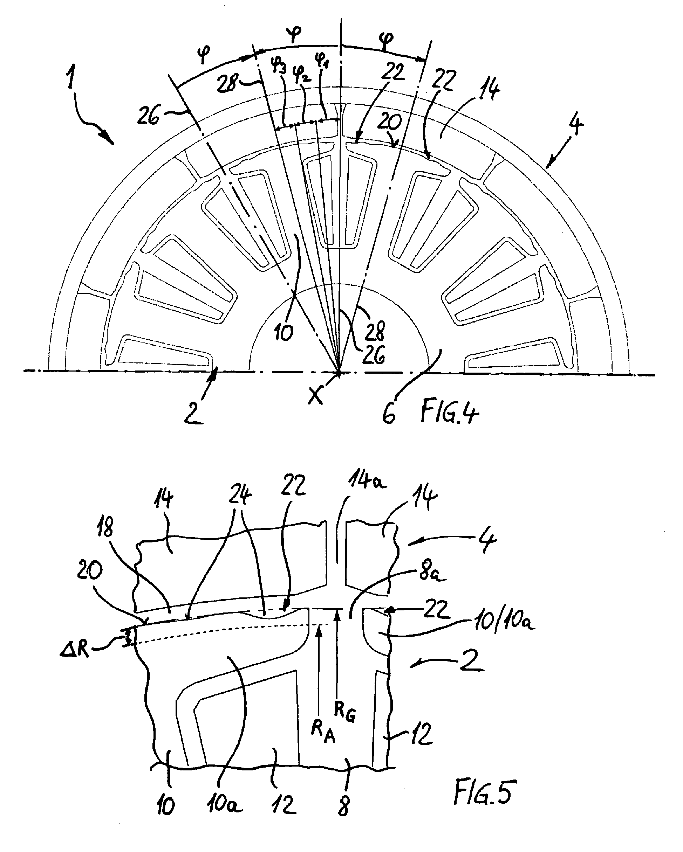

Um diese Nutrastmomente zu beseitigen oder zumindest deutlich zu reduzieren, ist vorgesehen, dass jeder Statorzahn 10 auf seiner dem Luftspalt 18 zugewandten, eigentlich in Umfangsrichtung kreisbogenförmig gekrümmten Oberfläche 20 ausgehend von seinen in Umfangsrichtung an die beidseitig benachbarten Nutschlitze 8a angrenzenden Seitenbereichen jeweils einen reliefartigen, den Luftspalt 18 bereichsweise radial vergrößernden Topografiebereich 22 mit mindestens einer konkaven Aussparung 24 (s. dazu insbesondere die vergrößerten Ansichten in Fig. 5 bis 7) und mit einem in Umfangsrichtung stetigen, wellenartigen, sprung- und kantenfreien Verlauf aufweist. Hierbei verlaufen jedenfalls die Statorzähne 10 in den wellenartigen Topografiebereichen 22 sowie auch im Bereich der Statornuten 8 und Nutschlitze 8a in axialer Richtung gesehen gerade bzw. zur Motorachse X parallel. Vorteilhafterweise gilt dies entsprechend auch für den Rotor 4, d. h. die Polmagnete 14 weisen gerade Seiten auf, und die Polübergänge 14a sind axial gerade ausgebildet. Hierdurch wird im Sinne der obigen Aufgabe eine einfache und kostengünstige Herstellung des Elektromotors 1 ermöglicht. Dennoch wird eine deutliche Reduzierung des Nutrastmomentes erreicht (vgl. dazu in Fig. 8 den gestrichelten Momentverlauf B).

In zweckmäßiger Ausgestaltung sind die wellenartigen Topografiebereiche 22 in Umfangsrichtung bezüglich radialer Nutmittelachsen 26 sowie entsprechend auch bezüglich radialer Zahnmittelachsen 28 symmetrisch auf den Oberflächen 20 der Statorzähne 10 ausgebildet. Hierzu wird insbesondere auf die Darstellung in Fig. 4 verwiesen, wonach sich jeder wellenartige Topografiebereich 22 - bezogen auf die Nutmittelachse 26 der jeweils benachbarten Statornut 8 - über einen Umfangswinkel ϕ in Richtung der radialen Zahnmittelachse 28 erstreckt, wobei der Umfangswinkel ϕ maximal gleich dem Quotienten aus dem gesamten Statorumfang von 360° dividiert durch die doppelte Anzahl 2N von Statornuten 8 bzw. Statorzähnen 10 ist. Es gilt folglich die Beziehung

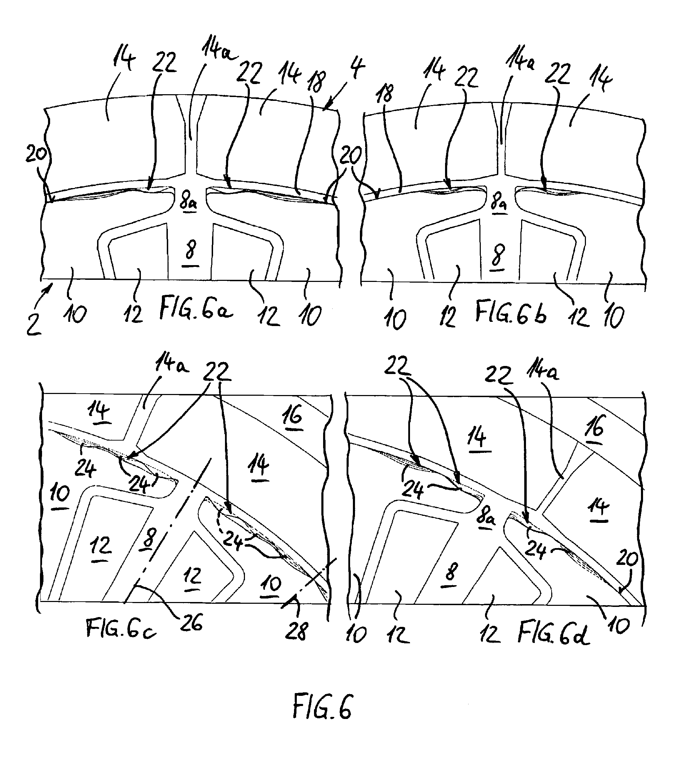

Wie insbesondere den Darstellungen in Fig. 6 und 7 zu entnehmen ist, ist erfindungsgemäß zur Anpassung an verschiedene Ausführungen des Elektromotors 1 jeder wellenartige Topografiebereich 22 aus mehreren, insbesondere zwei oder drei konkaven Aussparungen 24 bestehen, die sich in Umfangsrichtung aneinander anschließen und stetig, tangential ineinander übergehen. Hierdurch ist jeweils zwischen zwei benachbarten Aussparungen 24 ein konvexer Übergang gebildet. Die dem jeweiligen Nutschlitz 8a nächstliegende Aussparung 24 weist die größte radiale Tiefe auf, wobei die Tiefen der weiteren Aussparungen 24 mit zunehmendem Winkelabstand ϕ von der Nutmittelachse 26 abnehmen. Hieraus resultiert eine Kontur ähnlich einer ausklingenden (Sinus-)Schwingung.

Wie sich aus Fig. 5 ergibt, sind alle Aussparungen 24 der wellenartigen Topografiebereiche 22 bezüglich ihrer maximalen radialen Tiefe so ausgelegt, dass sie innerhalb eines radialen Tiefenbereiches ΔR liegen, der bis zu 3 % des Gesamt-Radius R_{G} des Stators 2 bzw. des Eisenkerns 6 im außerhalb der wellenartigen Topografiebereiche 22 liegenden Bereich der Statorzahn-Oberflächen 20 beträgt. In Fig. 5 ist dazu eine maximal mögliche radiale Tiefe der Aussparungen 24 mit einem Aussparungsradius R_{A} eingezeichnet. Hierbei ist R_{A} mindestens 0,97 . R_{G} (R_{A} ≥ 0,97 R_{G}).

Wie anhand der Darstellung in Fig. 4 veranschaulicht ist, liegt in jedem wellenartigen Topografiebereich 22 - ausgehend von der Nutmittelachse 26 - eine erste konkave Aussparung 24 in einem ersten Winkelbereich ϕ₁ von beispielsweise 4° bis 6°. An die erste Aussparung 24 kann sich stetig eine zweite konkave Aussparung 24 anschließen, die bevorzugt eine geringere radiale Tiefe aufweist, und die sich im Anschluss an den ersten Winkelbereich ϕ₁ über einen zweiten Winkelbereich ϕ₂ von beispielsweise 4° bis 8° erstreckt. Schließlich kann sich optional an die zweite Aussparung 24 stetig noch eine dritte konkave Aussparung 24 mit einer bevorzugt nochmals reduzierten radialen Tiefe anschließen, die sich im Anschluss an den zweiten Winkelbereich ϕ₂ über einen dritten Winkelbereich ϕ₃ von beispielsweise bis zu 5° erstreckt.

Hierbei hängen die Anzahl, die Tiefe und die Umfangserstreckung der jeweiligen Aussparungen 24 und die zugehörigen Winkelbereiche im Wesentlichen von der Polzahl des Motors ab. In besonders bevorzugter Ausgestaltung weist der Stator 2 zwölf Statornuten 8 und entsprechend zwölf Statorzähne 10 auf. Somit ist bevorzugt N = 12. Die Anzahl P der Polmagnete 14 ist hierbei bevorzugt P = N ± 2 oder P = N ± 4. Daraus resultiert eine Polzahl P von zehn oder vierzehn oder aber von acht oder sechzehn. Hierbei muss jedenfalls gelten P ≠ N, damit der Motor bei drei Wicklungssträngen ein ausreichendes Drehmoment erzeugen kann.

Für die bevorzugten Polzahlen P können die Winkelbereiche ϕ₁, ϕ₂ und ϕ₃ nach der folgenden Tabelle ausgelegt sein:

| **Polzahl P** | **ϕ₁** | **ϕ₂** | **ϕ₃** |
|---|---|---|---|
| 10 | 6° | 7,5° | - |
| 14 | 4° | 5° | - |
| 8 | 6° | 4° | 5° |
| 16 | 6° | 7° | - |

Die Ausführung für P = 10 ist in Fig. 6a veranschaulicht, die Ausführung für P = 14 in Fig. 6b, die Ausführung für P = 8 in Fig. 6c und schließlich für P = 16 in Fig. 6d. In diesen Darstellungen ist zu erkennen, dass die genaue Verlaufskontur der Topografiebereiche 22 innerhalb der beschriebenen Grenzen variieren kann.

Abschließend wird noch zum Wirkprinzip der Erfindung auf Fig. 7 und 8 verwiesen. Normalerweise entsteht ein Nutrastmoment durch eine Interaktion des Polübergangs 14a mit dem Nutschlitz 8a. Allerdings erzeugen auch die erfindungsgemäß vorgesehenen Material-Aussparungen 24 der wellenartigen Topografiebereiche 22 eine Drehmomentschwankung. Diese ist jedoch aufgrund ihres Versatzes in Umfangsrichtung gegenüber den Nutschlitzen 8a gegenphasig zum eigentlichen Nutrastmoment und von ähnlicher Amplitude. Die von den Aussparungen 24 hervorgerufene Drehmomentschwankung und das Nutrastmoment überlagern sich und heben sich in ihrer resultierenden Wirkung ganz oder zumindest teilweise auf. Dies ist im Diagramm nach Fig. 8 veranschaulicht. Das normale Nutrastmoment ist durch eine vollgezeichnete Kurve A mit hoher Amplitude eingezeichnet. Der aus der Anwendung der vorliegenden Erfindung resultierende Momentverlauf ist in Fig. 8 als Punktlinie B eingezeichnet, die nur geringfügig um Null schwankt. Somit wird die Amplitude erheblich reduziert. Die Grundschwingung der Permanentmagnet-Flussverkettung geht hierbei jedoch lediglich um ca. 1 % zurück. Die hohe Drehmomentdichte des Motors bleibt somit vorteilhafterweise erhalten.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Elektromotor (1) mit einem Stator (2) und einem radialsymmetrischen, zur Rotation relativ zu dem koaxialen Stator (2) um eine gemeinsame Motorachse (X) vorgesehenen, permanentmagneterregten Rotor (4), wobei der Stator (2) einen radialsymmetrischen Eisenkern (6) mit einer bestimmten Anzahl (N) von in Umfangsrichtung jeweils über Statornuten (8) und Nutschlitze (8a) benachbarten Statorzähnen (10) aufweist, und wobei der Rotor (4) eine bestimmte Anzahl (P) von über den Umfang verteilt angeordneten und über Polübergänge (14a) benachbarten Polmagneten (14) aufweist und radial zwischen den Rotor-Polmagneten (14) und den Statorzähnen (10) ein umfangsgemäßer Luftspalt (18) gebildet ist, wobei jeder Statorzahn (10) auf seiner dem Luftspalt (18) zugewandten Oberfläche (20) ausgehend von seinen in Umfangsrichtung an die beidseitig benachbarten Nutschlitze (8a) angrenzenden Seitenbereichen jeweils einen reliefartigen, den Luftspalt (18) bereichsweise radial vergrößernden Topografiebereich (22) mit mindestens einer konkaven Aussparung (24) und mit einem in Umfangsrichtung stetigen, wellenartigen, sprung- und kantenfreien Verlauf aufweist, wobei jeder wellenartige Topografiebereich (22) mehrere, insbesondere zwei oder drei konkave, stetig ineinander übergehende Aussparungen (24) aufweist, die sich in Umfangsrichtung aneinander anschließen und deren radial gemessene Tiefen mit zunehmendem Winkelabstand (ϕ) von der Nutmittelachse (26) abnehmen.

2. Elektromotor nach Anspruch 1,
**dadurch gekennzeichnet, dass** die Statorzähne (10) in den wellenartigen Topografiebereichen (22) und im Bereich der Nutschlitze (8a) in axialer Richtung gesehen gerade bzw. zur Motorachse (X) parallel verlaufen.

3. Elektromotor nach Anspruch 1 oder 2,
**dadurch gekennzeichnet, dass** die wellenartigen Topografiebereiche (22) in Umfangsrichtung bezüglich radialer Nutmittelachsen (26) symmetrisch ausgebildet sind.

4. Elektromotor nach einem der Ansprüche 1 bis 3,
**dadurch gekennzeichnet, dass** sich jeder wellenartige Topografiebereich (22) bezogen auf die Nutmittelachse (26) der benachbarten Statornut (8) über einen Umfangswinkel (ϕ) in Richtung einer radialen Zahnmittelachse (28) erstreckt, wobei der Umfangswinkel (ϕ) maximal gleich dem Quotienten aus dem gesamten Statorumfang von 360° dividiert durch die doppelte Anzahl (2N) von Statorzähnen (10) ist.

5. Elektromotor nach einem der Ansprüche 1 bis 4,
**dadurch gekennzeichnet, dass** die wellenartigen Topografiebereiche (22) mit ihren konkaven Aussparungen (24) einen radialen Tiefenbereich (ΔR) definieren, der bis zu 3 % des Gesamt-Radius (R_{G}) des Stators (2) beträgt.

6. Elektromotor nach einem der Ansprüche 1 bis 5,
**dadurch gekennzeichnet, dass** in jedem wellenartigen Topografiebereich(22) ausgehend von der Nutmittelachse (26) eine erste konkave Aussparung (24) in einem ersten Winkelbereich (ϕ₁) von beispielsweise 4° bis 6° liegt.

7. Elektromotor nach Anspruch 6,
**dadurch gekennzeichnet, dass** sich an die erste Aussparung (24) stetig eine zweite konkave Aussparung (24) mit einer bevorzugt geringeren radialen Tiefe anschließt, die sich im Anschluss an den ersten Winkelbereich (ϕ₁) über einen zweiten Winkelbereich (ϕ₂) von beispielsweise 4° bis 8° erstreckt.

8. Elektromotor nach Anspruch 7,
**dadurch gekennzeichnet, dass** sich an die zweite Aussparung (24) stetig eine dritte konkave Aussparung (24) mit einer bevorzugt nochmals reduzierten radialen Tiefe anschließt, die sich im Anschluss an den zweiten Winkelbereich (ϕ₂) über einen dritten Winkelbereich (ϕ₃) von beispielsweise bis zu 5° erstreckt.

9. Elektromotor nach einem der Ansprüche 1 bis 8,
**dadurch gekennzeichnet, dass** die Polübergänge (14a) des Rotors (4) durch Abstände zwischen Magnetelementen oder - bei Einsatz eines Ringmagneten oder eines ringförmig angeordneten Magnetbandes - durch Nulldurchgänge der Rotormagnetisierung in Übergangsbereichen zwischen gegensinnigen Magnet-Polaritäten gebildet sind.

10. Elektromotor nach einem der Ansprüche 1 bis 9,
**dadurch gekennzeichnet, dass** die Rotor-Polmagnete (14) mit den Polübergängen (14a) axial bzw. achsparallel gerade ausgebildet sind.

11. Elektromotor nach einem der Ansprüche 1 bis 10,
**gekennzeichnet durch** eine Ausführung als Außenläufermotor, wobei der Rotor (4) den Stator (2) koaxial umschließt.

## Claims

1. An electric motor (1) with a stator (2) and a radial-symmetrical, permanent-magnet-excited rotor (4) provided for rotation relative to the coaxial stator (2) about a common motor axis (X), wherein the stator (2) has a radial-symmetrical iron core (6) with a defined number (N) of stator teeth (10) which are each adjacent in the circumferential direction via stator slots (8) and slot openings (8a), and wherein the rotor (4) has a defined number (P) of pole magnets (14) distributed around the circumference, the pole magnets (14) being adjacent to one another via pole transitions (14a), and a circumferential gap (18) is formed radially between the pole magnets (14) of the rotor and the stator teeth (10), wherein each stator tooth (10) has on its surface (20) facing the gap (18), and starting at its side regions adjacent to the slot openings (8a) neighbouring on both sides in the circumferential direction, a relief-like topographic region (22) radially enlarging the gap (18) in regions, said topographic region having at least one concave recess (24) and a consistent, wave-like, smooth and edge-free profile in the circumferential direction, wherein each wave-like topographic region (22) has a plurality of, in particular two or three, concave recesses (24) merging consistently into one another, which adjoin one another in the circumferential direction and whose radially-measured depths decrease with increasing angular distance (ϕ) from the central axis (26) of the slot.

2. An electric motor according to claim 1,
**characterised in that** the stator teeth (10) in the wave-like topographic regions (22) and in the region of the slot openings (8a) are arranged straight when seen in the axial direction and/or parallel to the motor axis (X).

3. An electric motor according to claim 1 or 2,
**characterised in that** the wave-like topographic regions (22) in the circumferential direction are configured symmetrical with respect to radial central axes (26) of the slots.

4. An electric motor according to any one of claims 1 to 3,
**characterised in that** each wave-like topographic region (22) extends relative to the central axis (26) of the slot of the adjacent stator slot (8) over a circumferential angle (ϕ) in the direction of a radial central axis (28) of the teeth, wherein the circumferential angle (ϕ) is at most equal to the quotient of the total stator circumference of 360° divided by twice the number (2N) of stator teeth (10).

5. An electric motor according to any one of claims 1 to 4,
**characterised in that** the concave recesses (24) of the wave-like topographic regions (22) define a radial depth region (ΔR) which is up to 3% of the total radius (R_{G}) of the stator (2).

6. An electric motor according to any one of claims 1 to 5,
**characterised in that**, starting at the central axis (26) of the slot, there is a first concave recess (24) in a first angular region (ϕ₁) of, for example, 4° to 6° in each wave-like topographic region (22).

7. An electric motor according to claim 6,
**characterised in that** adjacent to the first recess (24) there consistently is a second, concave recess (24) with a preferably smaller radial depth which adjoins the first angular region (ϕ₁) and extends over a second angular region (ϕ₂) of, for example, 4° to 8°.

8. An electric motor according to claim 7,
**characterised in that** adjacent to the second recess (24) there consistently is a third, concave recess (24) with a preferably still more reduced radial depth which adjoins the second angular region (ϕ₂) and extends over a third angular region (ϕ₃) of, for example, up to 5°.

9. An electric motor according to any one of claims 1 to 8,
**characterised in that** the pole transitions (14a) of the rotor (4) are formed by intervals between magnet elements or, when using a ring magnet or a magnet band arranged ring-shaped, by zero crossings of the rotor magnetisation in transition regions between opposite magnetic polarities.

10. An electric motor according to any one of claims 1 to 9,
**characterised in that** the pole magnets (14) of the rotor are configured axially and/or axially parallel straight with the pole transitions (14a).

11. An electric motor according to any one of claims 1 to 10,
**characterised by** an embodiment as an external-rotor motor, wherein the rotor (4) coaxially encloses the stator (2).

## Revendications

1. Moteur électrique (1) comprenant un stator (2) et un rotor (4) excité par des aimants permanents, symétrique radialement, prévu aux fins de la rotation par rapport au stator (2) coaxial autour d'un axe de moteur commun (X), dans lequel le stator (2) présente un noyau en fer (6) symétrique radialement et doté d'un nombre (N) défini de dents de stator (10) adjacentes dans la direction périphérique respectivement par l'intermédiaire de rainures de stator (8) et d'encoches de rainure (8a), et dans lequel le rotor (4) présente un nombre (P) défini d'aimants polaires (14) disposés de manière répartie sur la périphérie et adjacents par l'intermédiaire de transitions polaires (14a) et dans lequel un entrefer (18) périphérique est formé radialement entre les aimants polaires de rotor (14) et les dents de stator (10), chaque dent de stator (10) présentant, sur sa surface (20) tournée vers l'entrefer (18), en partant de ses zones latérales attenantes, dans la direction périphérique, aux encoches de rainure (8a) adjacentes des deux côtés, respectivement une zone en relief (22) agrandissant radialement par endroits l'entrefer (18) et dotée d'au moins un évidement (24) concave et présentant une allure constante dans la direction périphérique, de type ondulé, continue et exempte d'arête, dans lequel chaque zone en relief (22) de type ondulé présente plusieurs évidements (24), en particulier deux ou trois évidements, concaves se confondant de manière régulière, lesquels évidements se jouxtent dans la direction périphérique et dont les profondeurs mesurées radialement diminuent au fur et à mesure qu'une distance angulaire (ϕ) de l'axe médian de rainure (26) augmente.

2. Moteur électrique selon la revendication 1,
**caractérisé en ce que** les dents de stator (10) s'étendent, dans les zones en relief (22) de type ondulé et dans la zone des encoches de rainure (8a), vu dans la direction axiale, de manière rectiligne ou de manière parallèle par rapport à l'axe du moteur (X).

3. Moteur électrique selon la revendication 1 ou 2,
**caractérisé en ce que** les zones en relief (22) de type ondulé sont réalisées de manière symétrique dans la direction périphérique par rapport aux axes médians de rainure (26) radiaux.

4. Moteur électrique selon l'une quelconque des revendications 1 à 3, **caractérisé en ce que** chaque zone en relief (22) de type ondulé s'étend, par rapport à l'axe médian de rainure (26) de la rainure de stator (8) adjacente, sur un angle périphérique (ϕ) en direction d'un axe médian de dent (28) radial, dans lequel l'angle périphérique (ϕ) est au maximum égal au quotient de la périphérie totale de stator de 360° divisé par le nombre multiplié par deux (2N) de dents de stator (10).

5. Moteur électrique selon l'une quelconque des revendications 1 à 4, **caractérisé en ce que** les zones en relief (22) de type ondulé définissent avec leurs évidements (24) concaves une zone de profondeur radiale (ΔR), qui peut représenter jusqu'à 3 % du rayon total (RG) du stator (2).

6. Moteur électrique selon l'une quelconque des revendications 1 à 5, **caractérisé en ce que** dans chaque zone en relief (22) de type ondulé, en partant de l'axe médian de rainure (26), un premier évidement (24) concave est situé dans une première plage angulaire (ϕ1) comprise par exemple entre 4° et 6°.

7. Moteur électrique selon la revendication 6,
**caractérisé en ce qu'**un deuxième évidement (24) concave présentant une profondeur radiale de préférence plus petite jouxte de manière régulière le premier évidement (24), lequel deuxième évidement s'étend, dans le prolongement de la première plage angulaire (ϕ1), sur une deuxième plage angulaire (ϕ2) comprise par exemple entre 4° et 8°.

8. Moteur électrique selon la revendication 7,
**caractérisé en ce qu'**un troisième évidement (24) concave présentant une profondeur radiale de préférence à nouveau réduite jouxte le deuxième évidement (24) de manière régulière, lequel troisième évidement s'étend, dans le prolongement de la deuxième plage angulaire (ϕ2), sur une troisième plage angulaire (ϕ3) pouvant aller par exemple jusqu'à 5°.

9. Moteur électrique selon l'une quelconque des revendications 1 à 8, **caractérisé en ce que** les transitions polaires (14a) du rotor (4) sont formées par des distances entre des éléments magnétiques ou, dans le cas de l'utilisation d'un aimant annulaire ou d'une bande magnétique disposée de manière à présenter une forme annulaire, par des passages par zéro de l'aimantation de rotor dans des zones de transition entre des polarités magnétiques opposées.

10. Moteur électrique selon l'une quelconque des revendications 1 à 9, **caractérisé en ce que** les aimants polaires de rotor (14) présentant des transitions polaires (14a) sont réalisés de manière rectiligne axialement ou parallèlement à l'axe.

11. Moteur électrique selon l'une quelconque des revendications 1 à 10, **caractérisé par** une réalisation sous la forme d'un moteur à induit extérieur, sachant que le rotor (4) entoure de manière coaxiale le stator (2).
